# EUROPEAN PATENT SPECIFICATION

(11) **EP 3 822 576 B1**
(45) Date of publication and mention of the grant of the patent: **31.12.2025**
(21) Application number: 20207640.2
(22) Date of filing: 13.11.2020
(51) Int. Cl.: F42B 15/34, F42B 39/18, F41H 13/00

(54) **INTUMESCENT DIRECTED ENERGY PROTECTION**
INTUMESZIERENDER GERICHTETER ENERGIESCHUTZ
PROTECTION D'ÉNERGIE DIRIGÉE INTUMESCENTE

(30) Priority: 15.11.2019 US 201916685475
(43) Date of publication of application: 19.05.2021
(73) Proprietor: The Boeing Company, Arlington, VA 22202 (US)
(72) Inventor: KOZAR, Michael Patrick, Chicago, Illinois 60606-1596 (US)
(74) Representative: Howson, Richard Giles Bentham

(56) References cited:
- US-A- 4 889 400
- US-A- 5 323 682
- US-A- 6 014 274

## Description

### BACKGROUND

### 1. Field

Devices including intumescent materials and methods of making the same.

### 2. Description of the Related Art

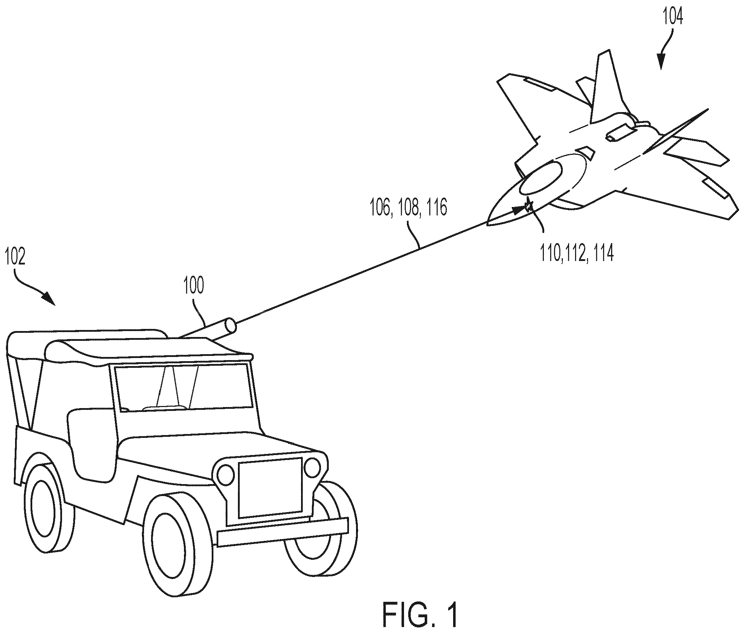

Fig. **1** illustrates a directed energy source 100 (e.g., a laser source or a microwave source) mounted on a vehicle 102 and used to irradiate a land, sea, or air based target (e.g., an airplane 104) with electromagnetic radiation 106 (e.g., directed energy 108) so as to damage 110 or degrade 112 the target and form a degradation 114. Examples of directed energy 108 include, but are not limited to, laser radiation 116 or microwave radiation. In some cases, the target can be maneuvered or hidden behind a land feature so as to evade the electromagnetic radiation 106. What is needed is a more effective method of protecting the targets from directed energy (e.g., a directed energy attack).

US 4,889,400, in accordance with its abstract, states "improved optical fiber constructions having an intumescent coating and one or more reflective coatings for protection against intermittent laser beams. Fire retardant latex ("FRL") is a preferred intumescent material, and aluminum, gold, silver, copper, rhodium and platinum are preferred reflective materials".

US 6,014,274, in accordance with its abstract, states "a multi-layer structure for controlling the transmission of laser radiation including outer and intermediate layers absorbent to incident laser radiation. The outer and intermediate layers ablate under the influence of the incident laser radiation to achieve substantial attenuation of on-axis transmission in an otherwise transparent structure".

US 5,323,682, in accordance with its abstract, states "the present invention relates to a method for protecting a space vehicle against directed energy, and to the resultant thermally protected space vehicle".

### SUMMARY

The present disclosure describes a method for protecting an underlying structure from directed energy. According to a first aspect of the present invention to which this European patent is directed, there is provided a method according to claim 1 for protecting an underlying structure from a directed energy.

According to a second aspect of the present invention to which this European patent is directed, there
is provided a composition of matter according to claim 9 for protecting an underlying structure from directed energy.

Preferred embodiments are set out in the dependent claims.

The present disclosure further describes a device, comprising a component including an intumescent material. The component includes a skin for a vehicle, a structural frame for the vehicle, clothing, armor, an aperture for an optical system, a fuel tank or a fuel conduit in a fuel system, or a housing for electronics. The intumescent material forms a barrier to suppress transmission of directed energy received on the intumescent material, and of heat generated in the barrier by the directed energy, to the component.

### BRIEF DESCRIPTION OF THE DRAWINGS

Fig. **1** illustrates an example directed energy threat and damage that may be caused by the directed energy. Although Fig. 1 illustrates the directed energy source mounted on the vehicle comprising a truck, the vehicle could be an airplane or a boat, for example.
Fig. 2 illustrates a coating comprising intumescent material on a substrate, according to one or more examples described herein.
Fig. 3A illustrates an example composition of matter including the intumescent material and a reflective surface combined with a substrate, wherein the intumescent material is between the substrate and the reflective surface.
Fig. 3B illustrates an example composition of matter including the intumescent material and a reflective surface combined with a substrate, wherein the reflective surface is between the substrate and the intumescent material.
Fig. 3C illustrates an example composition of matter including the intumescent material combined with a converter material for converting microwave radiation to thermal energy.
Fig. 3D illustrates an example composition of matter wherein the converter comprises features embedded in the intumescent material.
Fig. 3E illustrates an example composition of matter wherein the intumescent material is deposited on a structured surface of the converter material.
Fig. 3F-3H illustrate examples including a gap, wherein Fig. 3F illustrates a gap between the intumescent material and a substructure, Fig. 3G illustrates gaps between a reflective layer and the intumescent material and the substructure and the intumescent material, and Fig. 3H illustrates a reflective layer on the intumescent material and a gap between the intumescent material and the substructure.
Fig 4 illustrates intumescent material combined with a composite material, according to one example.

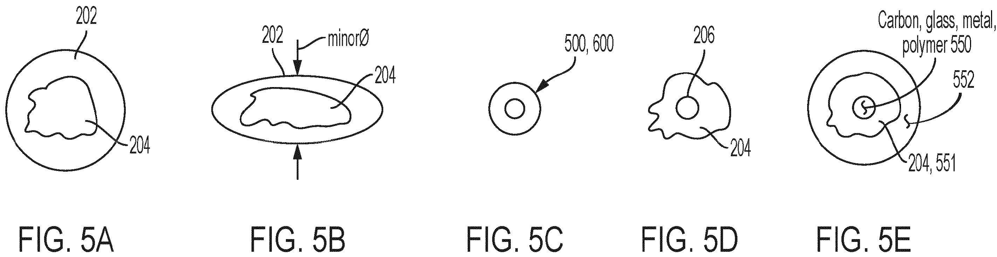

Figs. 5A-5E illustrate cross-sections of a particle or a fiber comprising an intumescent material, wherein Fig. 5A illustrates a an example wherein the core of the particle or fiber includes intumescent material, Fig. 5B illustrates an example wherein the cross-section of the particle or fiber is elongate or misshapen, Fig. 5C illustrates an example wherein the particle or fiber has a circular cross section (i.e., the particle is spherical), Fig. 5D illustrates an example wherein the intumescent material comprises a coating on the particle or fiber, and Fig. 5E illustrates a particle with multiple layers comprising a first layer including a core (e.g., comprising carbon, glass, metal, and/or polymer), a second layer including intumescent material 204 on the core; and a third layer (e.g., comprising carbon, glass, metal, and/or polymer) on the intumescent material 204.
Fig. 6A illustrates a fiber having a core including intumescent material and Fig. 6B illustrates a fiber having a cladding including intumescent material, wherein the core is misshapen or geometrical (e.g., the core has a circular cross-section, a polygonal cross-section, or cross-section comprising a complex geometry or shape).
Fig. 6C is a cross-sectional view showing an example composite material including the fiber or particle having a non-uniform or complex shape.
Fig. 6D is an example cross-sectional view through a fiber.
Fig. 6E is a longitudinal cross-sectional view of a fiber , according to another example.
Fig. 6F illustrates an example composite material including fibers embedded in resin, wherein the resin includes intumescent material.
Fig. 6G illustrates an example composite material including intumescent material.
Fig. 6H illustrates an example comprising a substrate including a plurality of grooves that help with holding the intumescent material on the substrate.
Figs. 7A-7D illustrates response of a coating including intumescent material to directed energy, showing the coating after no exposure to heat (Fig. 7A), 1 second exposure to heat (Fig. 7B), 1 minute exposure to heat (Fig. 7C), and 5 minute exposure to heat (Fig. 7D), wherein the times given are approximate or notional times.
Fig. 8 illustrates response of a composite material including intumescent material, showing formation of char on both sides of the substrate.
Fig. 9 illustrates response of a composite material including intumescent material, showing formation of char and ablation of material from the substrate.

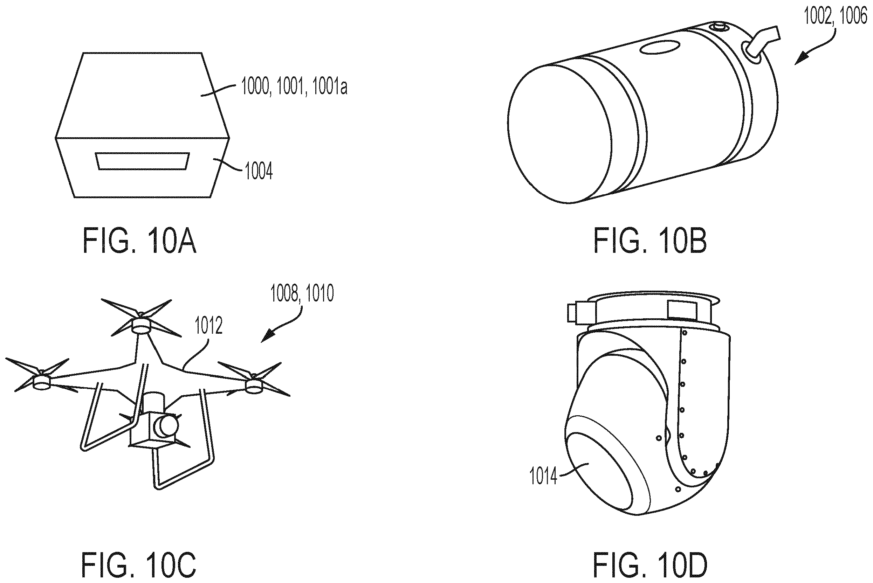

Fig. **1**0A-10D illustrate example system components or vehicles including intumescent material, showing an electronics system (Fig. 10A), a fuel system (Fig. 10B), a drone (Fig. 10C), and an aperture (Fig. 10D).
Fig. **1**0E illustrates an exemplary airframe including intumescent material.

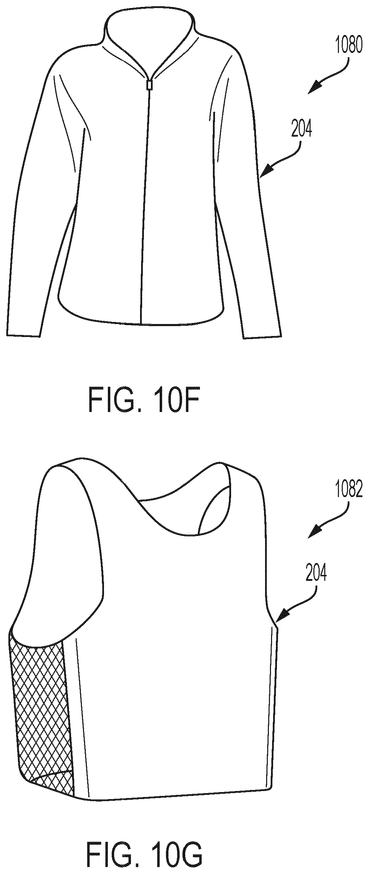

Fig. **1**0F illustrates clothing including body armor and FIG. 10G illustrates body armor including intumescent material.
Fig. **1**0H illustrates an example building or shelter structure including intumescent material.
Fig. **1**1 is a flowchart illustrating a method of protecting an underlying (e.g., device structure) using intumescent material.

### DESCRIPTION

In the following description, reference is made to the accompanying drawings which form a part hereof, and which is shown, by way of illustration, several examples. It is understood that other examples may be utilized and structural changes may be made without departing from the scope of the present invention to which this European patent is directed as defined by the appended claims.

### Technical Description

The present disclosure describes systems and methods using intumescent materials for defensively protecting structures, vehicles, or components from directed energy , e.g., comprising high energy laser radiation or high energy microwave radiation. Certain types of intumescent materials have been applied in paint in buildings or to structural members as a fire-proofing material. Without being bound to a particular scientific theory, intumescence incorporates an ablative burning mechanism wherein heat is consumed via an endothermic char forming reaction while the thermally stable char seals in hot gasses with near zero mass. The char may block out heat transfer via conduction, convection and/or radiation. As a heat shield material including the intumescent material is exposed to a sufficient level of convective or radiative heat transfer, the in-depth thermal gradients induce relative levels of thermochemical decomposition that protect the surface underlying the intumescent material. In one or more examples, a sufficient level of heat transfer comprises the heat transfer resulting from the intumescent material absorbing electromagnetic radiation having an intensity greater than 100 milliwatts (mW) per centimeter square. Although intumescent materials have been used for fire resistance, intumescent materials have not been considered as a means to protect a structure from directed energy (e.g., electromagnetic radiation comprising laser radiation or microwave radiation).

### Example intumescent material configurations

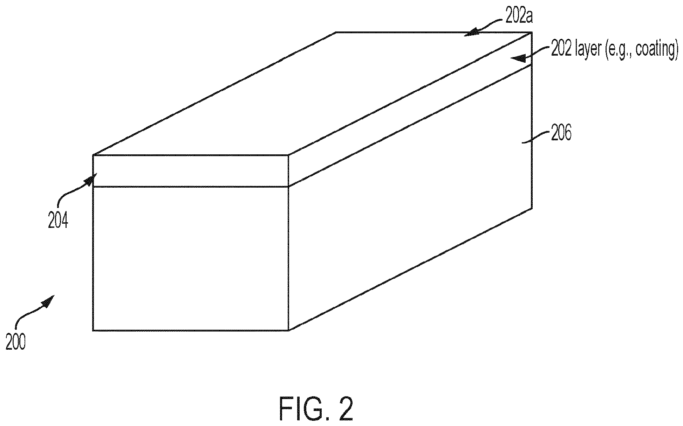

Fig. 2 illustrates a composition of matter 200 comprising a layer 202 (e.g., protection layer) including an intumescent material 204 applied to a substrate 206, e.g., so that the layer comprises a coating that coats a surface of the substrate 206. In various examples, the layer 202 is formulated in a variety of ways to achieve a variety of properties depending on the application. Examples include, but are not limited to, the following.
1. Transparency of the layer 202 can be controlled. In one example, the layer 202 transmits wavelength/frequency band(s) of interest. In another example, the layer 202 is opaque to visible electromagnetic radiation. In another example, the layer is optically transparent.
2. The intumescent material 204 in the layer comprising a topcoat or overcoat, a base coat, a mid-layer, or any combination of the topcoat, base coat, or the mid-layer.
3. The topcoat that is blackened (e.g., to enhance absorption of the directed energy) or mirrored (e.g., to reflect or scatter the directed energy).
4. The intumescent material 204 comprising particles (e.g., spherical or elongated particles) in the layer or coating. In one or more examples, encapsulated particles allow handling or mixing so as to overcome environmental challenges including, but not limited to, moisture, ultraviolet radiation, and airspeed. Example configurations include, but are not limited to, the following.
   (i) The particles encapsulated in a thermoplastic resin whose melt temperature is less than the activation energy of the intumescent material and wherein the underlying substrate 206 or object is powder coated.
   (ii) The particles encapsulated in thermoset resin (e.g., an epoxy) whose cure temperature is less than the activation energy of the intumescent material or reactive species, e.g., comprising the intumescent material.
   (iii) The particles encapsulated in a metal whose processing temperature is less than the activation energy of the intumescent material or reactive species, allowing higher processing temperatures.
   (iv) The particles encapsulated in a an inorganic material (e.g., glass, glass ceramic, ceramic) whose processing temperature is less than the activation energy of the intumescent material or reactive species (e.g., comprising the intumescent material).
5. The layer 202 is an applique 202a formulated with or including an adhesive so that the intumescent material can be applied to a substrate 206 and subsequently removed or replaced. In another example, the coating is an applique 202a on a substrate 206 comprising a pressure sensitive adhesive.
6. Any combination of examples 1-5.

### Reflective material, gaps, and converter material examples

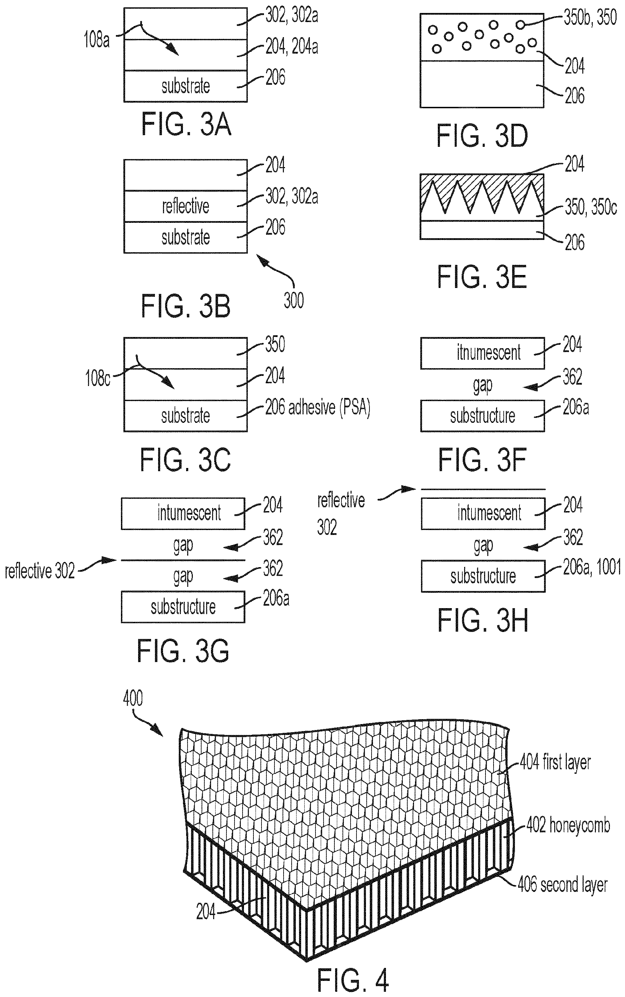

Fig. 3A and Fig. 3B illustrate a composition of matter 300 including an intumescent material 204 combined with a reflective material comprising a reflective layer 302 (having a reflective surface 302a). The reflective layer 302 reflects the directed energy 108 away from the underlying substrate, wherein the intumescent material 204 is activated to protect from a portion 108a of the directed energy 108 that has not been reflected away by the reflective layer 302. Examples include, but are not limited to, the reflective layer having a reflectivity of ≥80%, ≥90%, ≥95%, or ≥98%.

Fig. 3C, Fig. 3D, and Fig. 3E illustrate an example combining the intumescent material 204 with a converter material 350 that responds to the directed energy 108 comprising microwave radiation, the converter material 350 converting the microwave radiation to thermal energy 108c activating the intumescent material 204. Fig. 3D illustrates the converter material 350 comprises features 350b such as, but not limited to, particles, fibers, adjuncts, or other features that screen the intumescent material 204. The features 350b are embedded in the intumescent material 204. Fig. 3E illustrates an example wherein the converter material 350 comprises a structured layer 350c including, for example, grooves, triangular features, or a roughened surface, wherein the structured layer 350c underlies a layer including the intumescent material 204 (e.g., but not limited to, a particle or fiber comprising intumescent material, e.g., a core-sheath nanoparticle).

Fig. 3F and Fig. 3H illustrate examples including a gap 362, wherein Fig. 3F illustrates a gap 362 between the intumescent material 204 and a substrate 206 comprising a sub-structure (e.g., underlying structure 206a), and Fig. 3G illustrates a gap 362 between a reflective layer 302 and the intumescent material 204 and a gap 362 between the sub-structure (underlying structure 206a) and the intumescent material 204. Fig. 3H illustrates a reflective layer 302 on the intumescent material 204 and a gap 362 between the intumescent material 204 and the sub-structure (underlying structure 206a). The gap 362 and/or the intumescent material 204 form a barrier 204a protecting the sub-structure (underlying structure 206a) from, for example, a temperature rise above a predetermined threshold level or a degradation 114 caused by irradiation of the sub-structure (underlying structure 206a) with the directed energy 108 in an absence of the barrier In one or more examples, the degradation prevents normal operation of the underlying structure 206a (e.g., as defined by a manufacturer's specifications for the underlying structure). In one or more examples, the gap 362 comprises an air gap, spacer layer, or thermal insulation layer, or other gap or material providing a thermal break between the protection layer including the intumescent material and the underlying structure being protected. In one or more examples wherein the gap 362 comprises an air gap, a support is provided (e.g., periodically) in the gap or from the edges. Example supports include, but are not limited to, a honeycomb, an egg crate structure, studs, or standoffs, etc.

### Composite material examples

Fig. 4, Fig. 5A, Fig. 5B, Fig. 6A, Fig. 6B, Fig. 6C, Fig. 6D, Fig. 6E, Fig. 6F, and Fig. 6G illustrate the intumescent material 204 disposed in a variety of ways in a composite material 400. As used herein, a composite material 400 is defined as a material including the intumescent material 204 in combination with another material (e.g., chosen for other desirable properties different from intumescent properties). Fig. 4 illustrates the intumescent material 204 comprising a layer within the composite material 400 or a coating on a layer in the composite material. In the example of Fig. 4, the composite material 400 comprises a cellular structure 402 (e.g., honeycomb) sandwiched between a first layer 404 and a second layer 406. The intumescent material 204 is disposed on, or incorporated in the cells of, the cellular structure 402, or applied to the cellular structure 402 as a coating (partial or full coating or partially or totally filling the cells in the cellular structure). In other examples, the intumescent material is incorporated into one or more layers and/or at one or more planar locations of the composite material.

Figs. 5A-5E illustrates the cross-section of a composition of matter or composite material 400 comprising a particle 500 or fiber 600 (e.g., spherical or elongated particles or fibers) including the intumescent material 204. Fig. 5A illustrates the particle 500 or fiber 600 comprises a layer 202 (e.g., coating) cladding the intumescent material 204. Examples of the layer 202 include, but are not limited to, a polymer, a glass, or a metal. Fig. 5B illustrates the particle can be non-spherical (e.g., elongate) with a major diameter or dimension and a minor diameter or dimension (minor Φ). Fig. 5C and Fig. 5D illustrate examples wherein the particle 500 or fiber 600 includes a layer 202 (e.g., coating) comprising the intumescent material 204 cladding a substrate 206, wherein the substrate 206 comprises a core or lobe including (but not limited to) a glass, a polymer or a metal. Fig. 5E illustrates a particle 500 or fiber 600 with multiple layers comprising a first layer 550 including a core (e.g., comprising carbon, glass, metal, and/or polymer), a second layer 551 including intumescent material 204 on the core; and a third layer 552 (e.g., comprising carbon, glass, metal, and/or polymer) on the intumescent material 204.

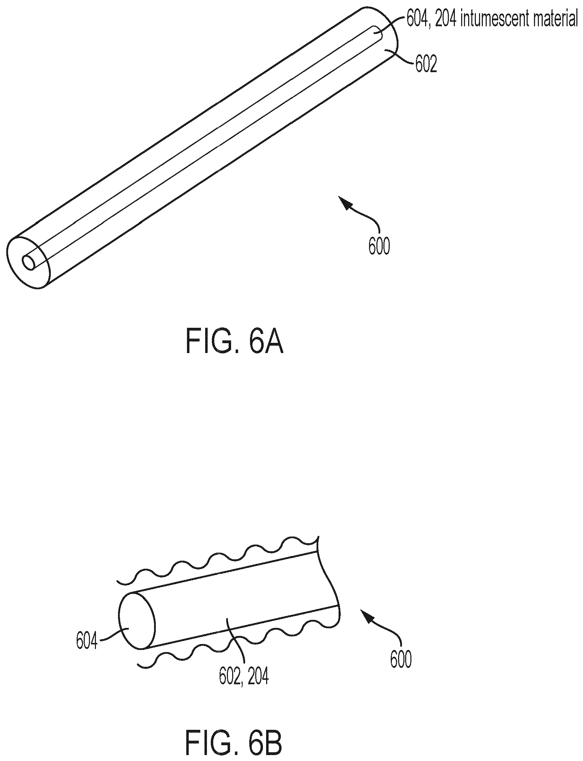

Fig. 6A illustrates a fiber 600 including a cladding 602 (e.g., comprising polymer, a metal, or an inorganic material), wherein the cladding clads a substrate 206 comprising a core 604 or lobe (or offset core) comprising the intumescent material 204, e.g., such that the intumescent material 204 is embedded in the material forming the core. Fig. 6B illustrates an example wherein the cladding 602 comprises the intumescent material 204 and the core 604 comprises the polymer, metal, or organic material.

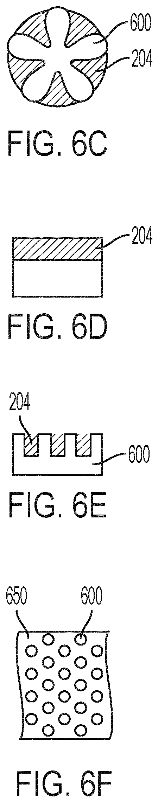

Figs. 6C illustrates an example wherein the fiber 600 has a complex or non-uniform cross-section. Fig. 6D is a cross sectional view of the fiber in Fig. 6C showing the intumescent material 204 between lobes in a surface of the fiber 600. Fig. 6E is a cross-sectional view showing the intumescent material 204 in channels or grooves on a surface of the fiber 600.

Fig. 6F illustrates an example wherein the fibers 600 are embedded in a resin 650 and the resin 650 includes intumescent material 204.

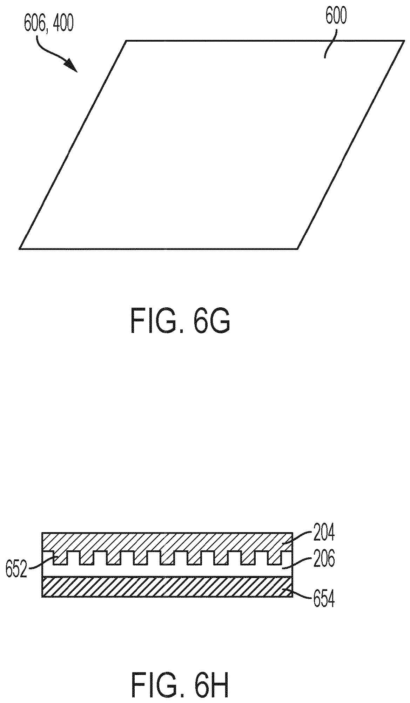

Fig. 6G illustrates an example wherein the composite material 400 comprises a plurality of the fibers 600 connected together into a fibrous mat, fabric 606 (e.g., woven or non-woven fabric), or composite material 400 is made from unidirectional plies. Examples include the intumescent material 204 disposed in or on the fibers, e.g., as described above, or in the pore spaces between the fibers. In one or more further examples, particles 500 including the intumescent material 204 are dispersed in the fibrous mat, fabric 606 (e.g., woven or non-woven fabric). In yet one or more further examples, the mat, or fabric 606 (e.g., woven or non-woven fabric) comprises a panel. In one or more examples, intumescent material 204 is dispersed in the resin 650 (e.g., wherein the resin is combined with the composite material 400.

Fig. 6H illustrates an example wherein the substrate 206 (on which the intumescent material 204 is deposited) includes a plurality of structures 652 (e.g., grooves or channels) that help with holding the intumescent material 204 on the substrate 206. Fig 6H shows an example wherein the substrate 206 is on an adhesive 654.

In one or more particle or fiber examples, the particles 500, fibers 600, or intumescent material 204 in the particles or fibers are encapsulated in a thermoplastic whose melt or processing temperature is less than the activation energy of the intumescent material. In one or more further examples, the particles are encapsulated in a thermoset resin whose cure temperature is less than the activation energy of the intumescent material or reactive species comprising the intumescent material, allowing higher processing temperatures.

Examples of fibers 600 include, but are not limited to, filaments and or fibers or filaments disposed in fiber tows. Example materials for the fibers 600, powders, or particles 500 encapsulating or combined with the intumescent material 204 include, but are not limited to materials comprising or consisting essentially of, glass, fused silica, fiberglass, metal, carbon fiber, carbon, boron, metal, mineral and polymer, etc. Examples of the polymers include, but are not limited to, thermoplastics, such as polyamide, polyetherketone (PEK), polyether ether ketone (PEEK), polyetherketoneketone (PEKK), Polyetherimide (PEI), or hybrid forms of thermoplastics as previously mentioned, with modifiers and/or inclusions such as carbon nanotube(s), graphene, clay modifier(s), discontinuous fiber(s), surfactant(s), stabilizer(s), powder(s) and particulate(s). Examples of metallic powders include, but are not limited to, aluminum alloy powders, steel alloy powders, or titanium alloy powders. As used herein, example thermoset resins include, but are not limited to, epoxies, bezoxazines, polyesters, polyimides, and bis-maleimides, etc.). Example dimensions for the fiber and particles include, but are not limited to, diameters, or dimensions in a range of 1 nanometer (nm) to 1000 micrometers. Dimensions include minor and major dimensions (for example, when particles are non-spherical or particles and fibers have non circular cross sections).

In other examples, a material suitable for use as a three-dimensional printing material comprises or is combined with the intumescent material.

In various examples, the areal weight of the protection including the intumescent material (e.g., the composite material 400, e.g., plies, particles 500, or fibers 600 including the intumescent material, or the layer 202 including the intumescent material) is 0.001 pounds per square foot (psf) to 10 psf. In one or more aerospace applications, the areal weight is 0.001 psf to 1 psf. In one or more non-aerospace applications (e.g., on a ground vehicle) the areal weight is in a range of 0.010 - 5 psf.

### Example Operation

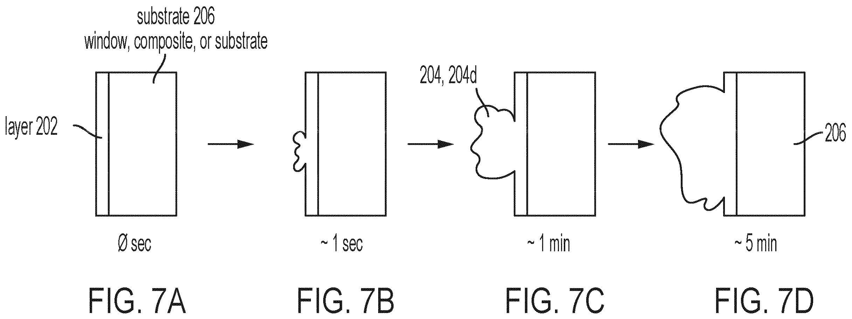

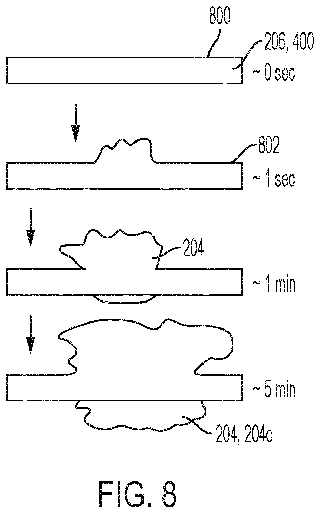

Fig. 7A, Fig. 7B, Fig. 7C, Fig. 7D, Fig. 8, and Fig. 9 illustrate intumescent materials 204 expand (e.g., so as to form expanded intumescent material 204d) and insulate when exposed to a heat source and/or directed energy 108, starting at the weight of the layer 202 (e.g., paint or coating). Also shown are neat regions 800 and activated regions 802 of a composite material 400 including the intumescent material 204. The response of the intumescent material 204 protects the underlying structure 206a from damage including, but not limited to, thermal damage such as convective thermal damage. In one or more examples, the intumescent material 204 forms char comprising a charred region 900 that protects the underlying structure 206a from the damage. In various examples, the formulation of the layer 202 (e.g., coating), intumescent agent in the intumescent material, layer (e.g., coating) thickness, and/or method of application are selected to achieve the required properties that provide the protective properties of the layer 202 or composite material 400 against directed energy 108. By understanding the chemistry of the intumescence of the intumescent material 204, and relating the pyrolysis region expansion of the intumescent material 204 to the decomposition state and the heating rate due to laser radiation or microwave radiation, one can accurately capture the thermodynamic phenomenon and the relative effects on conduction heat transfer, and utilize the properties to protect a structure (e.g., underlying structure 206a) combined with the intumescent material 204. In various examples, different intumescent materials 204c are tested.

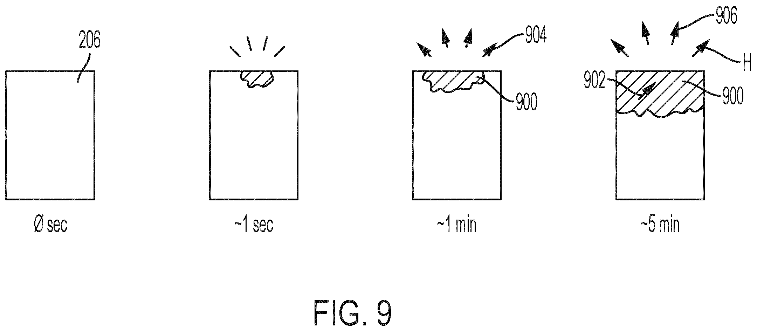

Fig. 9 illustrates the intumescent material 204 expands in response to the directed energy 108 triggering an ablative burning mechanism wherein heat (H) is generated and consumed so as to form the char/charred region 900, hot gases 902 are formed, the charred region 900 seals in the hot gases with near zero mass, pieces 904 are ablated from the charred region, and the charred region 900 blocks transfer of the heat (H) to the underlying structure 206a through heat transfer 906 comprising thermal conduction, convection, and/or radiation.

In various examples, the intumescent material 204 withstands the directed energy (e.g., having an intensity of ≥ 100 milliwatts per centimeter square) for target times (e.g., loitering times or illumination times) in a range of ≤ 2000 seconds (e.g., 1 second - 2000 seconds), ≤ 300 seconds (e.g., in a range of 1 second 300 seconds), or ≤ 60 seconds (e.g., in a range of 1-60 seconds). In various examples, the intumescent material 204 responds to the directed energy (by expanding and/or forming char) after the target times of in a range of ≤ 2000 seconds (e.g., 1 second - 2000 seconds), ≤ 300 seconds (e.g., in a range of 1 second 300 seconds), or ≤ 60 seconds (e.g., in a range of 1-60 seconds).

In one or more examples, the protection layer (e.g., layer 202 or composite material 400) including the intumescent material 204 is designed to prevent the substrate's 206 temperature from increasing above a maximum temperature rise in response to the directed energy 108, wherein the maximum temperature rise is given by the degradation temperature minus the pre-irradiation temperature, and wherein degradation temperature is the temperature at which the underlying substrate 206 degrades in response to the intumescent material. In various examples, the degradation temperature is the glass transition temperature (Tg), melt temperature, the softening temperature, or the ignition temperature of the underlying substrate 206. In one example, for the substrate 206 comprising or consisting essentially of plastic having Tg = 200°C and a pre-illumination temperature of -20°C, the maximum temperature rise is 200 - (-20) = 220°C. In one or more further examples, the protection layer including the intumescent material 204 is designed to keep the temperature rise ≤90% of the maximum temperature rise.

### Device Examples

Figs. 10A-10D illustrate examples wherein the intumescent material 204 is disposed to provide protection of a device 1000, device structure 1001a, underlying structure 1001 (e.g., substrate 206), or a component 1002 of a device 1000 or apparatus. The intumescent material 204 is incorporated using any of the methods described herein (e.g., as a layer 202 (e.g., coating) or as a composite material 400), for example.

Examples include a device 1000 or component 1002 comprising, but not limited to, an electrical system, an optical system, a fuel system, a hydraulic system , or a pneumatic system. In various examples, the intumescent material 204 is provided as a layer 202 (e.g., coating) on the package of the component or on the component itself, or the intumescent material is embedded in materials of the package and/or the component. Fig. 10A illustrates an example wherein the component 1002 comprises a housing 1004 for electronics. Fig. 10B illustrates an example wherein the component 1002 comprises a fuel tank 1006.

Fig. 10C illustrates a vehicle 1008 comprising a drone 1010 comprising an intumescent material 204. In one or more examples, the intumescent material is disposed in a skin 1012 or as a layer 202 (e.g., coating) on the exterior of the drone. In one or more further examples, the intumescent material is disposed to protect only critical components or critical structures of the drone. Examples of critical structures or critical components include, but are not limited to, the airframe of the drone, the transceiver used to remotely control the drone, a computer controlling the drone, and the power source responsible for propelling the drone.

Fig. 10D illustrates an aperture 1014 example. Examples include, but are not limited to, the intumescent material 204 disposed in a layer 202 (e.g., coating) on the aperture 1014 and/or on a housing of the aperture. As described herein, the layer 202 (e.g., coating) may be formulated to be transparent to the wavelength or frequency band of interest being transmitted to a detector behind the aperture.

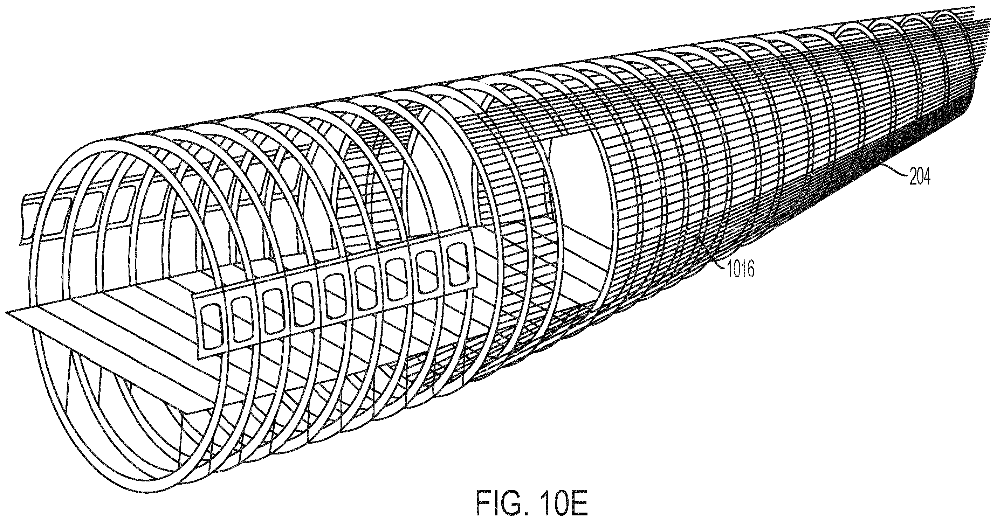

Fig. 10E illustrates an example structural frame 1016 (e.g., airframe) including the intumescent material 204. The intumescent material is incorporated using any of the methods described herein, for example. Examples include, but are not limited to, the intumescent material 204 disposed as a layer 202 (e.g., coating) on the airframe or in a composite material 400 used in the airframe (e.g., embedded in the structure of the airframe). In one or more examples, the intumescent material 204 is disposed so as to only protect critical structures. Examples of critical structures include, but are not limited to, bulkheads, longerons, stringers, and wing ribs.

FIG. 10F illustrates clothing 1080 (e.g., a jacket, pants, or shirt) including intumescent material 204, e.g., as a layer 202 on the clothing 1080 or as part of the fabric 606 of the clothing 1080 or incorporated using any of the methods described herein. FIG. 10G illustrates body armor 1082 including intumescent material 204, e.g., as a layer 202 on the body armor 1082 or as part of the fabric 606 of the body armor 1082 .

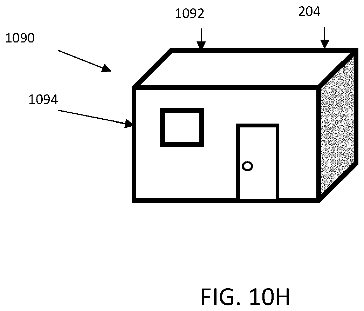

FIG. 10H illustrates a building 1090 (e.g., providing shelter) including a component such as, but not limited to, a frame 1092, a wall 1094, a roof, a window, a door, or other structural member including intumescent material 204. In various examples, the intumescent material is incorporated using any of the methods described herein. In various examples, the intumescent material is comprises a layer 202 on the component or the component comprises (or is integrated with) the intumescent material (e.g., the component includes a composite material 400).

### Process Steps

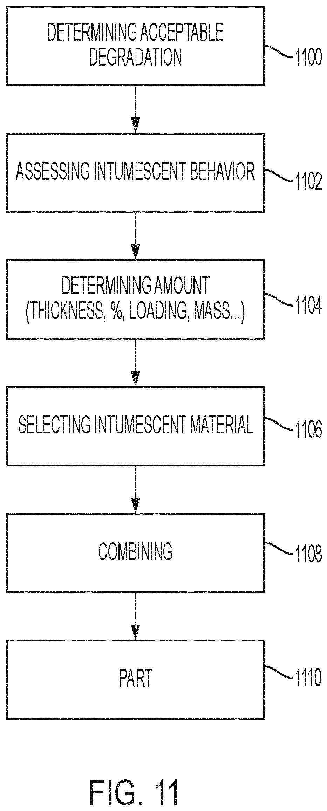

Fig. 11 illustrates a method for protecting a device structure 1001a (e.g., underlying structure or substrate 206) from directed energy 108.

The method comprises the following steps.

Block 1100 represents determining the degradation of a device structure e.g., vehicle, armor, clothing, or component or composite material, in response to the directed energy irradiating the device structure without a protective barrier. The determining comprises calculating a loiter time and a decomposition gradient and a thickness of the device structure that is degraded by the directed energy; and determining a penetration of the directed energy into the device structure.

Block 1102 represents assessing an intumescent behavior of a plurality of different intumescent materials in combination with the device structure and the directed energy incident on the different intumescent materials. In one or more examples, the assessing comprises measuring, determining, or obtaining a degree of expansion of the different intumescent materials and a thermal conductivity of the different intumescent materials, in response to the directed energy; and/or an effectiveness of the different intumescent materials as a protective barrier against the directed energy. In one or more further examples, the assessing further comprises determining a change in a physical property and/or a chemical property of the intumescent material in response to the directed energy.

Block 1104 represents determining an amount (e.g., the thickness, percentage, loading, mass) of each of the different intumescent materials required for the different intumescent materials to act as the barrier to the directed energy.

Block 1106 represents selecting the intumescent material 204 from the plurality of the different intumescent materials, the intumescent material having a composition and thickness such that the expanded intumescent material prevents the degradation 114.

Block 1108 represents combining the intumescent material with the device structure, the underlying structure, or in a composite material, wherein the intumescent material forms a barrier to suppress transmission of the directed energy received on the intumescent material, , and of heat generated in the barrier by the directed energy, to the device structure, the underlying structure, or the composite material.

Block 1110 represents the end result, a composition of matter or device or part including the intumescent material.

### Conclusion

This concludes the description of the examples of the present disclosure. The foregoing description of the examples has been presented for the purposes of illustration and description. It is not intended to be exhaustive or to limit the disclosure to the precise form disclosed. Many modifications and variations are possible in light of the above teaching. It is intended that the scope of rights be limited not by this detailed description, but rather by the claims appended hereto.

## Claims

1. A method for protecting an underlying structure (1001) from a directed energy (108), the method comprising:
combining an intumescent material (204) with the underlying structure (1001), wherein the intumescent material (204) forms a barrier (204a) to suppress transmission of the directed energy (108), and of heat (H) generated in the barrier by the directed energy (108), to the underlying structure (1001); the method further comprising
combining the intumescent material (204) with a converter material (350) that responds to the directed energy (108) comprising microwave radiation, the converter material (350) converting the microwave radiation to thermal energy (108c) activating the intumescent material (204); or
combining the intumescent material (204) with a reflective layer (302) that reflects the directed energy (108) away from the underlying structure (1001) and wherein a gap is provided between the reflective layer (302) and the intumescent material (204), wherein the gap (362) provides a thermal break between the intumescent material (204) and the underlying structure (1001).

2. The method of claim 1, wherein the directed energy (108) comprises electromagnetic radiation (106) including microwave radiation or infrared radiation, the electromagnetic radiation (106) having an intensity of greater than 100 milliwatts per centimeter square.

3. The method of any preceding claim, wherein:
one or more of the intumescent material (204), or a gap (362) between the intumescent material (108) and the underlying structure (1001), form the barrier (204a) preventing a temperature of the underlying structure (1001) from increasing by more than a maximum temperature rise in response to the directed energy, and wherein:
the maximum temperature rise is given by the degradation temperature minus a pre-irradiation temperature comprising the temperature of the underlying structure (1001) prior to the barrier (204a) receiving the directed energy (108); and
the degradation temperature is a glass transition temperature (Tg), a melt temperature, a softening temperature, or an ignition temperature of the underlying structure (1001).

4. The method of any preceding claim, wherein the intumescent material (204) expands and chars in response to absorbing the directed energy (108) so as to form the barrier (204a) comprising an expanded intumescent material (204c) including a charred region (900).

5. The method of claim 4, further comprising:
determining the degradation (114) of the underlying structure (1001) in response to the directed energy (108) irradiating the underlying structure (1001) without the barrier (204a), comprising:
calculating a decomposition gradient and a thickness of the underlying structure (1001) that is degraded by the directed energy (108); and
determining a penetration of the directed energy (108) into the underlying structure (1001);
assessing an intumescent behavior of a plurality of different intumescent materials (204c) in combination with the underlying structure (1001) and the directed energy (108) incident on the plurality of different intumescent materials (204c); and
selecting the intumescent material (204) from the plurality of different intumescent materials (204c), the intumescent material (204) having a composition and a thickness such that the expanded intumescent material (204d) prevents the degradation (150a); wherein the assessing comprises one or more of measuring, determining, or obtaining:
a degree of expansion of the plurality of different intumescent materials (204c) and a thermal conductivity of the plurality of different intumescent materials (204c), in response to the directed energy (108); or
an effectiveness of the plurality of different intumescent materials (204c) as the barrier (204a) to the directed energy (108).

6. The method of claim 5, wherein the assessing further comprises determining a change in one or more of a physical property or a chemical property of the plurality of different intumescent materials (204c) in response to the directed energy (108).

7. The method of claim 1 when combining the intumescent material (204) with a reflective layer (302) that reflects the directed energy (108) away from the underlying structure (1001) and wherein a gap is provided between the reflective layer (302) and the intumescent material (204), wherein the gap (362) provides a thermal break between the intumescent material (204) and the underlying structure (1001); further wherein
the intumescent material (204) is positioned between the reflective layer (302) and the underlying structure (1001) such that the intumescent material (204) is activated to protect from a portion (108a) of the directed energy (108) that has not been reflected away by the reflective layer (302).

8. The method of any preceding claim, wherein the combining comprises providing one or more particles or one or more fibers including the intumescent material.

9. A composition of matter (200, 300) for protecting an underlying structure (1001) from directed energy (108), comprising:
a composite material (400) including an intumescent material (204), wherein the intumescent material (204) is configured to form a barrier (204a) to suppress transmission of the directed energy (108), and of heat (H) generated in the barrier (204a) by the directed energy (108), to the underlying structure (1001) when the intumescent material (204) is combined, in use, with the underlying structure;
wherein the intumescent material (204) is combined with a converter material (350) that responds to the directed energy (108) comprising microwave radiation, the converter material (350) converting the microwave radiation to thermal energy (108c) activating the intumescent material (204); or
wherein the intumescent material (204) is combined with a reflective layer (302) that reflects the directed energy (108) away from the underlying structure (1001); and wherein a gap is provided between the reflective layer (302) and the intumescent material (204), wherein the gap (362) provides a thermal break between the intumescent material (204) and the underlying structure (1001).

10. The composition of matter of claim 9, wherein the composite material (400) includes particles (500) or fibers (600) including the intumescent material (204).

11. The composition of matter of claim 9 or 10, wherein the composite material (400) comprises a resin (650), an applique (202a), or a fabric (606) comprising fibers (600).

12. The composition of matter of claim 11, wherein the fabric (606) comprises a polymer or a glass.

## Patentansprüche

1. Verfahren zum Schützen einer darunterliegenden Struktur (1001) vor einer gerichteten Energie (108), wobei das Verfahren umfasst:
Kombinieren eines intumeszierenden Materials (204) mit der darunterliegenden Struktur (1001), wobei das intumeszierende Material (204) eine Barriere (204a) bildet, um die Übertragung der gerichteten Energie (108) und von Wärme (H), die in der Barriere durch die gerichtete Energie (108) erzeugt wird, auf die darunterliegende Struktur (1001) zu unterdrücken; wobei das Verfahren ferner umfasst:
Kombinieren des intumeszierenden Materials (204) mit einem Wandlermaterial (350), das auf die gerichtete Energie (108) reagiert, die Mikrowellenstrahlung umfasst, wobei das Wandlermaterial (350) die Mikrowellenstrahlung in Wärmeenergie (108c) umwandelt, wodurch das intumeszierende Material (204) aktiviert wird; oder
Kombinieren des intumeszierenden Materials (204) mit einer reflektierenden Schicht (302), die die gerichtete Energie (108) von der darunterliegenden Struktur (1001) weg reflektiert, und wobei ein Spalt zwischen der reflektierenden Schicht (302) und dem intumeszierenden Material (204) bereitgestellt wird, wobei der Spalt (362) eine thermische Trennung zwischen dem intumeszierenden Material (204) und der darunterliegenden Struktur (1001) bereitstellt.

2. Verfahren nach Anspruch 1, wobei die gerichtete Energie (108) elektromagnetische Strahlung (106) einschließlich Mikrowellenstrahlung oder Infrarotstrahlung umfasst, wobei die elektromagnetische Strahlung (106) eine Intensität von mehr als 100 Milliwatt pro Quadratzentimeter aufweist.

3. Verfahren nach einem der vorhergehenden Ansprüche, wobei:
ein oder mehrere von dem intumeszierenden Material (204) oder einem Spalt (362) zwischen dem intumeszierenden Material (108) und der darunterliegenden Struktur (1001) die Barriere (204a) bildet/bilden, die verhindert, dass eine Temperatur der darunterliegenden Struktur (1001) in Reaktion auf die gerichtete Energie um mehr als einen maximalen Temperaturanstieg ansteigt, und wobei:
der maximale Temperaturanstieg durch die Abbautemperatur minus einer Vorbestrahlungstemperatur gegeben ist, welche die Temperatur der darunterliegenden Struktur (1001) umfasst, bevor die Barriere (204a) die gerichtete Energie (108) empfangen hat; und
die Abbautemperatur eine Glasübergangstemperatur (Tg), eine Schmelztemperatur, eine Erweichungstemperatur oder eine Zündtemperatur der darunterliegenden Struktur (1001) ist.

4. Verfahren nach einem der vorhergehenden Ansprüche, wobei das intumeszierende Material (204) in Reaktion auf Absorbieren der gerichteten Energie (108) expandiert und verkohlt, um die Barriere (204a) zu bilden, die ein expandiertes intumeszierendes Material (204c) umfasst, das eine verkohlte Region (900) einschließt.

5. Verfahren nach Anspruch 4, ferner umfassend:
Bestimmen des Abbaus (114) der darunterliegenden Struktur (1001) in Reaktion darauf, dass die gerichtete Energie (108) die darunterliegende Struktur (1001) ohne die Barriere (204a) bestrahlt, umfassend:
Berechnen eines Zersetzungsgradienten und einer Dicke der darunterliegenden Struktur (1001), die durch die gerichtete Energie (108) abgebaut wird; und
Bestimmen einer Penetration der gerichteten Energie (108) in die darunterliegende Struktur (1001);
Beurteilen eines Intumeszenzverhaltens einer Vielzahl von verschiedenen intumeszierenden Materialien (204c) in Kombination mit der darunterliegenden Struktur (1001) und der gerichteten Energie (108), die auf die Vielzahl von verschiedenen intumeszierenden Materialien (204c) einfällt; und
Auswählen des intumeszierenden Materials (204) aus der Vielzahl von verschiedenen intumeszierenden Materialien (204c), wobei das intumeszierende Material (204) eine Zusammensetzung und eine Dicke aufweist, so dass das expandierte intumeszierende Material (204d) den Abbau (150a) verhindert; wobei das Beurteilen eines oder mehrere von Messen, Bestimmen oder Erhalten von Folgenden umfasst:
einem Expansionsgrad der Vielzahl von verschiedenen intumeszierenden Materialien (204c) und einer Wärmeleitfähigkeit der Vielzahl von verschiedenen intumeszierenden Materialien (204c) in Reaktion auf die gerichtete Energie (108); oder
einer Wirksamkeit der Vielzahl von verschiedenen intumeszierenden Materialien (204c) als die Barriere (204a) gegenüber der gerichteten Energie (108).

6. Verfahren nach Anspruch 5, wobei das Beurteilen ferner Bestimmen einer Änderung von einer oder mehreren von einer physikalischen Eigenschaft oder einer chemischen Eigenschaft der Vielzahl von verschiedenen intumeszierenden Materialien (204c) in Reaktion auf die gerichtete Energie (108) umfasst.

7. Verfahren nach Anspruch 1, wenn das intumeszierende Material (204) mit einer reflektierenden Schicht (302) kombiniert wird, welche die gerichtete Energie (108) von der darunterliegenden Struktur (1001) weg reflektiert, und wobei ein Spalt zwischen der reflektierenden Schicht (302) und dem intumeszierenden Material (204) bereitgestellt wird, wobei der Spalt (362) eine thermische Trennung zwischen dem intumeszierenden Material (204) und der darunterliegenden Struktur (1001) bereitstellt; wobei ferner
das intumeszierende Material (204) zwischen der reflektierenden Schicht (302) und der darunterliegenden Struktur (1001) positioniert wird, so dass das intumeszierende Material (204) aktiviert wird, um vor einem Teil (108a) der gerichteten Energie (108) zu schützen, der nicht von der reflektierenden Schicht (302) weg reflektiert wurde.

8. Verfahren nach einem der vorhergehenden Ansprüche, wobei das Kombinieren Bereitstellen eines oder mehrerer Partikel oder einer oder mehrerer Fasern umfasst, welche das intumeszierende Material einschließen.

9. Materialzusammensetzung (200, 300) zum Schützen einer darunterliegenden Struktur (1001) vor gerichteter Energie (108), umfassend:
ein Verbundmaterial (400), das ein intumeszierendes Material (204) einschließt, wobei das intumeszierende Material (204) dazu ausgelegt ist, eine Barriere (204a) zu bilden, um die Übertragung der gerichteten Energie (108) und von Wärme (H), die in der Barriere (204a) durch die gerichtete Energie (108) erzeugt wird, auf die darunterliegende Struktur (1001) zu unterdrücken, wenn das intumeszierende Material (204) im Gebrauch mit der darunterliegenden Struktur kombiniert wird;
wobei das intumeszierende Material (204) mit einem Wandlermaterial (350) kombiniert ist, das auf die gerichtete Energie (108) reagiert, die Mikrowellenstrahlung umfasst, wobei das Wandlermaterial (350) die Mikrowellenstrahlung in Wärmeenergie (108c) umwandelt, wodurch das intumeszierende Material (204) aktiviert wird; oder
wobei das intumeszierende Materials (204) mit einer reflektierenden Schicht (302) kombiniert ist, welche die gerichtete Energie (108) von der darunterliegenden Struktur (1001) weg reflektiert; und wobei ein Spalt zwischen der reflektierenden Schicht (302) und dem intumeszierenden Material (204) bereitgestellt wird, wobei der Spalt (362) eine thermische Trennung zwischen dem intumeszierenden Material (204) und der darunterliegenden Struktur (1001) bereitstellt.

10. Materialzusammensetzung nach Anspruch 9, wobei das Verbundmaterial (400) Partikel (500) oder Fasern (600) einschließt, welche das intumeszierende Material (204) einschließen.

11. Materialzusammensetzung nach Anspruch 9 oder 10, wobei das Verbundmaterial (400) ein Harz (650), eine Applike (202a) oder ein Textilmaterial (606) umfasst, welches Fasern (600) umfasst.

12. Materialzusammensetzung nach Anspruch 11, wobei das Textilmaterial (606) ein Polymer oder ein Glas umfasst.

## Revendications

1. Procédé destiné à protéger une structure sous-jacente (1001) contre une énergie dirigée (108), le procédé comprenant :
la combinaison d'un matériau intumescent (204) avec la structure sous-jacente (1001), le matériau intumescent (204) formant une barrière (204a) pour supprimer la transmission de l'énergie dirigée (108) et de la chaleur (H) générée dans la barrière par l'énergie dirigée (108) à la structure sous-jacente (1001) ; le procédé comprenant en outre
la combinaison du matériau intumescent (204) avec un matériau de conversion (350) qui réagit à l'énergie dirigée (108) comprenant un rayonnement micro-ondes, le matériau de conversion (350) convertissant le rayonnement micro-ondes en énergie thermique (108c) activant le matériau intumescent (204) ; ou
la combinaison du matériau intumescent (204) avec une couche réfléchissante (302) qui réfléchit l'énergie dirigée (108) loin de la structure sous-jacente (1001), un espace étant ménagé entre la couche réfléchissante (302) et le matériau intumescent (204), l'espace (362) assurant une rupture thermique entre le matériau intumescent (204) et la structure sous-jacente (1001).

2. Procédé de la revendication 1, dans lequel l'énergie dirigée (108) comprend un rayonnement électromagnétique (106) comportant un rayonnement micro-ondes ou un rayonnement infrarouge, le rayonnement électromagnétique (106) ayant une intensité supérieure à 100 milliwatts par centimètre carré.

3. Procédé d'une quelconque revendication précédente, dans lequel :
le matériau intumescent (204) et/ou un espace (362) entre le matériau intumescent (108) et la structure sous-jacente (1001) forment la barrière (204a) empêchant l'élévation d'une température de la structure sous-jacente (1001) au-delà d'une élévation de température maximale en réponse à l'énergie dirigée, et dans lequel :
l'élévation de température maximale est donnée par la différence entre la température de dégradation et une température pré-irradiation comprenant la température de la structure sous-jacente (1001) avant que la barrière (204a) reçoive l'énergie dirigée (108) ; et
la température de dégradation est une température de transition vitreuse (Tg), une température de fusion, une température de ramollissement ou une température d'inflammation de la structure sous-jacente (1001).

4. Procédé d'une quelconque revendication précédente, dans lequel le matériau intumescent (204) se dilate et se carbonise en réponse à l'absorption de l'énergie dirigée (108) de manière à former la barrière (204a) comprenant un matériau intumescent dilaté (204c) comportant une région carbonisée (900).

5. Procédé de la revendication 4, comprenant en outre :
la détermination de la dégradation (114) de la structure sous-jacente (1001) en réponse à l'énergie dirigée (108) irradiant la structure sous-jacente (1001) sans la barrière (204a), ce qui comprend :
le calcul d'un gradient de décomposition et d'une épaisseur de la structure sous-jacente (1001) qui est dégradée par l'énergie dirigée (108) ; et
la détermination d'une pénétration de l'énergie dirigée (108) à l'intérieur de la structure sous-jacente (1001) ;
l'évaluation du comportement intumescent d'une pluralité de matériaux intumescents différents (204c) en combinaison avec la structure sous-jacente (1001) et l'énergie dirigée (108) incidente sur la pluralité de matériaux intumescents différents (204c) ; et
la sélection du matériau intumescent (204) parmi la pluralité de matériaux intumescents (204c) différents, le matériau intumescent (204) ayant une composition et une épaisseur telles que le matériau intumescent dilaté (204d) empêche la dégradation (150a) ; dans lequel l'évaluation comprend la mesure, et/ou la détermination, et/ou l'obtention :
d'un degré de dilatation de la pluralité de matériaux intumescents différents (204c) et d'une conductivité thermique de la pluralité de matériaux intumescents différents (204c), en réponse à l'énergie dirigée (108) ; ou
d'une efficacité de la pluralité de matériaux intumescents différents (204c) comme barrière (204a) contre l'énergie dirigée (108).

6. Procédé de la revendication 5, dans lequel l'évaluation comprend en outre la détermination d'une variation d'une propriété physique et/ou d'une propriété chimique de la pluralité de matériaux intumescents différents (204c) en réponse à l'énergie dirigée (108).

7. Procédé de la revendication 1, lors de la combinaison du matériau intumescent (204) avec une couche réfléchissante (302) qui réfléchit l'énergie dirigée (108) loin de la structure sous-jacente (1001) et dans lequel un espace est ménagé entre la couche réfléchissante (302) et le matériau intumescent (204), l'espace (362) assurant une rupture thermique entre le matériau intumescent (204) et la structure sous-jacente (1001) ; dans lequel, en outre,
le matériau intumescent (204) est positionné entre la couche réfléchissante (302) et la structure sous-jacente (1001), de sorte que le matériau intumescent (204) est activé pour protéger contre une partie (108a) de l'énergie dirigée (108) qui n'a pas été réfléchie par la couche réfléchissante (302).

8. Procédé d'une quelconque revendication précédente, dans lequel la combinaison comprend l'obtention d'une ou plusieurs particules ou d'une ou plusieurs fibres comportant le matériau intumescent.

9. Composition de matière (200, 300) destinée à protéger une structure sous-jacente (1001) contre de l'énergie dirigée (108), comprenant :
un matériau composite (400) comportant un matériau intumescent (204), le matériau intumescent (204) étant conçu pour former une barrière (204a) afin de supprimer la transmission de l'énergie dirigée (108), et de la chaleur (H) générée dans la barrière (204a) par l'énergie dirigée (108), à la structure sous-jacente (1001) lorsque le matériau intumescent (204) est combiné, à l'usage, avec la structure sous-jacente ;
dans laquelle le matériau intumescent (204) est combiné avec un matériau de conversion (350) qui réagit à l'énergie dirigée (108) comprenant un rayonnement micro-ondes, le matériau de conversion (350) convertissant le rayonnement micro-ondes en énergie thermique (108c) activant le matériau intumescent (204) ; ou
dans laquelle le matériau intumescent (204) est combiné avec une couche réfléchissante (302) qui réfléchit l'énergie dirigée (108) loin de la structure sous-jacente (1001) ; et dans laquelle un espace est ménagé entre la couche réfléchissante (302) et le matériau intumescent (204), l'espace (362) assurant une rupture thermique entre le matériau intumescent (204) et la structure sous-jacente (1001).

10. Composition de matière de la revendication 9, dans laquelle le matériau composite (400) comporte des particules (500) ou des fibres (600) comportant le matériau intumescent (204).

11. Composition de matière de la revendication 9 ou 10, dans laquelle le matériau composite (400) comprend une résine (650), un appliqué (202a) ou un tissu (606) comprenant des fibres (600).

12. Composition de matière de la revendication 11, dans laquelle le tissu (606) comprend un polymère ou un verre.
